(19) Europäisches Patentamt
European Patent Office
Office européen des brevets

(11) Publication number: 0 236 253 B1

(12) # EUROPEAN PATENT SPECIFICATION

(45) Date of publication of patent specification: **18.12.91 Bulletin 91/51**

(51) Int. Cl.$^5$: **C08F 136/06**, C08F 2/02, C08F 4/70

(21) Application number: **87630020.3**

(22) Date of filing: **10.02.87**

(54) **Process for bulk polymerizing butadiene.**

(30) Priority: **19.02.86 US 830814**
**27.10.86 US 923368**

(43) Date of publication of application:
**09.09.87 Bulletin 87/37**

(45) Publication of the grant of the patent:
**18.12.91 Bulletin 91/51**

(84) Designated Contracting States:
**AT CH DE ES GR LI LU NL SE**

(56) References cited:
**EP-A- 0 093 073**
**FR-A- 1 270 196**
**FR-A- 2 090 960**
**US-A- 3 770 710**
**CHEMICAL ABSTRACTS, vol. 100, no. 2, 9th January 1984, page 77, abstract no. 8262r, Columbus, Ohio, US**

(73) Proprietor: **THE GOODYEAR TIRE & RUBBER COMPANY**
**1144 East Market Street**
**Akron, Ohio 44316-0001 (US)**

(72) Inventor: **Throckmorton, Morford Church**
**967 Newport Road**
**Akron Ohio 44303 (US)**
Inventor: **Stachowiak, Robert William**
**1685 Far View Road**
**Akron Ohio 44313 (US)**
Inventor: **Wilson, Christopher Lee**
**384 Heritage Avenue**
**Canal Fulton Ohio 44614 (US)**

(74) Representative: **Leitz, Paul**
**Goodyear Technical Center-Luxembourg**
**Patent-Department**
**L-7750 Colmar-Berg (LU)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### Background of the Invention

Many types of polymerization processes are used in the preparation of synthetic polymers. For example, the polymerization of a monomer into a polymer can be conducted in a number of different types of reaction systems, including suspension polymerization systems, emulsion polymerization systems, solution polymerization systems, and bulk polymerization systems. Each of these systems has certain advantages and disadvantages.

In suspension polymerization systems, the initiator (catalyst) is dissolved in the monomer, the monomer is dispersed in water, and a dispersing agent is incorporated to stabilize the suspension formed. All suspension polymerization processes use some type of surfactant to keep the monomer globules dispersed during the reaction in order to avoid coalescence and agglomeration of the polymer. Not only does the suspension stabilizer affect the particle size and shape, but also the clarity, transparency, and film-forming properties of the resultant polymer. A variety of dispersing agents including water-insoluble, finely divided, inorganic materials and organic materials, depending upon the monomer to be polymerized, have been used as dispersing agents. Thus, for example, talc, barium, calcium, and magnesium carbonates, silicates, phosphates and sulfates, as well as poly(vinylalcohol), salts of styrene-maleic anhydride copolymers, vinyl acetate-maleic anhydride copolymers, starch, gelatin, pectin, alginates, methyl cellulose, carboxymethyl cellulose, bentonite, limestone and alumina have been used as suspending agents. A major advantage of suspension polymerization is that the polymeric products are obtained in the form of small beads which are easily filtered, washed, and dried. For reasons of cost and unreactivity, water is a much more desirable diluent and heat-transfer medium than most organic solvents.

However, in certain polymerization processes, for example, the preparation of very high cis-1,4-polybutadiene, while utilizing nickel catalyst systems the presence of moisture is highly undesirable. Thus, suspension polymerization in a water medium is not an effective process for the synthesis of very high cis-1,4-polybutadiene utilizing nickel catalyst systems.

An emulsion polymerization process is considered to be a three-phase reaction system consisting of large droplets of the monomer, the aqueous phase containing the dissolved initiator and the colloidal particles of monomer-swollen polymer. While the emulsion polymerization process has the economic advantage of using water as the emulsion base, not all polymerization processes can tolerate the presence of water. Such is the case with the polymerization of butadiene into very high cis-1,4-polybutadiene using nickel catalyst systems. In order to recover dry polymers which are prepared by emulsion polymerization, it is, of course, necessary to coagulate the rubber from the latex. Coagulation is generally accomplished by adding a combination of salt and acid to the latex. This results in the formation of waste water which can present environmental problems.

In solution polymerization, an organic solvent is used which is capable of dissolving the monomer, the polymer, and the polymerization catalyst or initiator. Inasmuch as the polymer is soluble in the organic solvent which is used, there is a tendency for the viscosity of the solution to increase as the molecular weight of the polymer increases. If this continues over a period of time, the solution becomes too viscous to handle in conventional polymerization reaction systems unless the solids content is limited to a low level. In commercial polymerization processes, it is desirable to obtain a polymerization mass which has a high concentration of solid polymer and, at the same time, comprises a material which is easy to handle and does not agglomerate on the walls of the reaction vessel utilized. The polymeric solution is generally steam stripped in order to remove the solvent and unreacted monomer. The aqueous slurry of crumb rubber is usually pumped to a skimming tank, a water expeller and an extruder dryer in order to remove the water. The steam stripping and drying operations consume a large amount of expensive energy. European Patent Application A -0 093 073 describes a process for the solution polymerization of 1,3-butadiene monomer into high cis-1,4-polybutadiene which utilizes as the catalyst system a mixture of (1) an organonickel compound, (2) an organoaluminum compound, and (3) hydrogen fluoride or a hydrogen fluoride complex. In the process described, the molecular weight of the polybutadiene is controlled by conducting the polymerization in the presence of a small amount of an alpha olefin, such as ethylene or propylene.

In nonaqueous dispersion polymerizations, an organic medium is utilized which is a very poor solvent for the polymer being produced. A dispersing agent is utilized in the organic medium in order to disperse the polymer being formed throughout the medium. The dispersing agents (dispersion stabilizers) which are utilized in such nonaqueous dispersion polymerizations are generally polymeric materials which can be block copolymers, random copolymers, or homopolymers. Nonaqueous dispersion polymerizations are described in detail in U.S. Patent 4,098,980 and U.S. Patent 4,452,960. Nonaqueous dispersion polymerization processes offer several distinct advantages over solution polymerizations and emulsion polymerizations including improved heat

transfer, higher polymer concentrations in the reaction medium, increased production capacity, and energy savings.

Bulk polymerization is the direct conversion of liquid monomers to polymer. Such bulk polymerizations are generally carried out by the addition of an initiator to a simple homogeneous system containing one or more monomers. The polymers produced in such bulk polymerizations can be but are not necessarily soluble in their own monomers which are in effect utilized as the reaction medium. For example, polyisoprene is fairly soluble in isoprene and polypentadiene is fairly soluble in 1,3-pentadiene, but high cis-1,4-polybutadiene is not very soluble in 1,3-butadiene monomer. The synthesis of polystyrene by the addition of a free radical initiator to styrene monomer is a good example of a very common bulk polymerization. The principal advantage of a bulk polymerization process is that no solvent is utilized. Thus, the cost of solvent recovery and recycle is eliminated. One disadvantage of bulk polymerization reactions is that it is difficult to control the reaction temperature during polymerization. In fact, attempts to bulk polymerize many types of monomers have resulted in the reaction getting totally out of control. Due to this difficulty, bulk polymerization has not been widely utilized in the commercial preparation of synthetic rubbers.

The concept of preparing synthetic rubbers by bulk polymerization is not new. It has been known for many years that diene monomers can be polymerized into synthetic rubbers in the absence of a solvent. In fact, the Germans and Russians synthesized polybutadiene and polydimethylbutadiene in bulk during World War II using alkali metal catalysts in a batch process. Polybutadiene has also been prepared by the addition of catalysts to small polymerization bottles containing butadiene monomer. Due to the highly exothermic nature of such bulk polymerizations, it is not at all uncommon for the polymerization bottles being utilized in these small scale bulk polymerizations to explode. Because such bulk polymerization reactions are essentially uncontrollable, polymer uniformity is very poor, gel formation is frequently a problem, and molecular weight control is very difficult. For these reasons, the bulk polymerization of 1,3-butadiene monomer into polybutadiene has not been widely considered to be commercially feasible.

The possibility of preparing synthetic rubbers through bulk polymerization has nevertheless remained an attractive possibility. This is because it would eliminate the need for utilizing solvents which must be separated from the rubber and recycled or otherwise disposed of. The cost of recovery and recycle of solvent adds greatly to the cost of the rubber being produced and can cause certain environmental problems. Recovery and separation of the rubber from the solvent also requires additional treatment and equipment, all of which further increase the cost of the rubber. The purification of solvents being recycled can also be very expensive and there is always the danger that the solvent may still retain impurities which will poison the polymerization catalyst. For example, benzene and toluene can form arene complexes with the catalyst which inhibit polymerization rates and which can result in the formation of polymers having lower molecular weights.

It has been proposed to control bulk polymerizations by employing a device for cooling the reaction zone by controlled evaporation of and removal of a portion of the liquid reactant from the reaction zone. This technique is sometimes referred to as autorefrigeration. A description of employing autorefrigeration in bulk polymerization appears in U.S. Patent 3,458,490. In a technique disclosed therein, a solution of polybutadiene in butadiene monomer was prepared in a solution polymerization type of reactor which was spirally agitated. However, only 35 percent of the butadiene monomer charged was converted to polymer. Steam stripping was employed to remove unreacted monomer from the polybutadiene product formed.

Another bulk polymerization process that utilizes autorefrigeration to control foaming is described in U.S. Patent 3,770,710. In a technique disclosed therein, a process was utilized which comprised initially preparing at a polymerization temperature which was not substantially in excess of about 50°C, a polymer-monomer solution having a solids content of only 20 to 40 percent and continuing the polymerization of said polymer-monomer solution in a subsequent reactor at a temperature in the range of 50°C to 150°C. A lithium containing catalyst is utilized in the process described therein with the Mooney viscosity of the resulting polymer increasing with polymerization time.

## Summary of the Invention

It has been unexpectedly found that a nickel catalyst system can be utilized in a process for continuously bulk polymerizing 1,3-butadiene monomer to high conversions on a large scale basis into high cis-1,4-polybutadiene having a uniform molecular weight. In high cis-1,4-polybutadiene at least 85% of the butadiene repeat units in the polymer have the cis-1,4-isomeric structure. The high cis-1,4-polybutadiene produced by this process has also been determined to have the same microstructure as high cis-1,4-polybutadiene produced with nickel catalyst systems in solution polymerizations. This method for bulk polymerizing 1,3-butadiene into high cis-1,4-polybutadiene in a continuous process comprises the steps as recited in the appended claim 1.

In order to reduce the molecular weight of the high cis-1,4-polybutadiene being synthesized, such bulk

polymerizations are normally conducted in the presence of at least one molecular weight regulator selected from the group consisting of alpha-olefin, cis-2-butene, trans-2-butene, allene, 1,4-pentadiene, 1,5-hexadiene, 1,6-heptadiene, 4-vinyl-1-cyclohexene, 1,2,4-trivinylcyclohexene, 1-trans-4-hexadiene, and hydrogen.

By utilizing the bulk polymerization process of the present invention, numerous distinct and highly beneficial advantages are realized. For instance, very rapid polymerizations are experienced by practicing the process of the subject invention. More specifically, conversions of 60 to 100 percent can be attained in times as short as 5 to 10 minutes. This is in contrast to periods of 1.5 to 30 hours which would normally be required in order to attain such high conversions while utilizing more conventional polymerization techniques. Thus, by practicing the bulk polymerization process of the instant invention, high conversions of 85 to 100 percent can be attained within reasonable periods of time.

By practicing the process of the present invention, polymers having relatively uniform or consistent molecular weights can be easily and practically prepared. This is in contrast to bulk polymerizations which are carried out using living catalysts, such as butyl lithium, or "pseudo-living" catalysts, such as rare earth metals, which can polymerize butadiene in bulk, but which produce polymers having molecular weights which are dependent upon the conversionr and residence time. The use of such living catalysts is also undesirable because the high molecular weight polymer produced also causes processing difficulties, such as plugging the bulk polymerization reactor. All of these problems are overcome by using the technique of the present invention, since polybutadienes of any desired molecular weight can be prepared while realizing very high conversions of up to 100 percent. Thus, it is possible to make polymers for specific applications requiring distinctly different molecular weights by simply modifying the process of the subject invention without limiting conversions.

The subject process also offers the distinct advantage of only requiring a minimal amount of butadiene monomer to be in the reaction zone. The reactors utilized require only a minimal amount of maintenance since they are of a self-cleaning design. Additionally, no steam stripping is required to remove volatile organic materials from the polybutadiene produced since a devolatilizer-extruder can be used to remove any organic materials in the rubber being made. However, in light of the fact that ultra-high conversions can be attained, the amount of volatile organic compounds, such as monomer, in the rubber produced is minimal in any case. This is, of course, because the reaction medium used is substantially solventless and will contain no more than about 10% organic compounds which are solvents for the high cis-1,4-polybutadiene, based upon the total weight of the reaction medium. In most cases the reaction medium will contain less than 4% by weight solvents for the high cis-1,4-polybutadiene or virtually no solvents at all.

## Detailed Description of the Invention

Butadiene monomer can be polymerized to very high cis-1,4-polybutadiene (95 percent or more cis-1,4-isomeric butadiene units) in a continuous bulk polymerization process using a three-component nickel catalyst system. This three-component nickel catalyst system includes an organoaluminum compound, a soluble nickel containing compound, and a fluorine containing compound.

The organoaluminum compound that can be utilized has the structural formula:

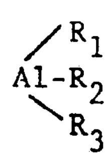

in which $R_1$ is selected from the group consisting of alkyl groups (including cycloalkyl), aryl groups, alkaryl groups, arylalkyl groups, alkoxy groups, hydrogen and fluorine; $R_2$ and $R_3$ being selected from the group consisting of alkyl groups (including cycloalkyl), aryl groups, alkaryl groups, and arylalkyl groups. Some representative examples of organoaluminum compounds that can be utilized are diethyl aluminum hydride, di-n-propyl aluminum hydride, di-n-butyl aluminum hydride, diisobutyl aluminum hydride, diphenyl aluminum hydride, di-p-tolyl aluminum hydride, dibenzyl aluminum hydride, phenyl ethyl aluminum hydride, phenyl-n-propyl aluminum hydride, p-tolyl ethyl aluminum hydride, p-tolyl n-propyl aluminum hydride, p-tolyl isopropyl aluminum hydride, benzyl ethyl aluminum hydride, benzyl n-propyl aluminum hydride, and benzyl isopropyl aluminum hydride, diethylaluminum ethoxide, diisobutylaluminum ethoxide, dipropylaluminum methoxide, trimethyl aluminum, triethyl aluminum, tri-n-propyl aluminum, triisopropyl aluminum, tri-n-butyl aluminum, triisobutyl aluminum, tripentyl aluminum, trihexyl aluminum, tricyclohexyl aluminum, trioctyl aluminum, triphenyl aluminum, tri-p-tolyl aluminum, tribenzyl aluminum, ethyl diphenyl aluminum, ethyl di-p-tolyl aluminum, ethyl dibenzyl aluminum,

diethyl phenyl aluminum, diethyl p-tolyl aluminum, diethyl benzyl aluminum and other triorganoaluminum compounds. The preferred organoaluminum compounds include triethyl aluminum (TEAL), tri-n-propyl aluminum, triisobutyl aluminum (TIBAL), trihexyl aluminum, diisobutyl aluminum hydride (DIBA-H), and diethyl aluminum fluoride.

The component of the catalyst which contains nickel can be any soluble organonickel compound. These soluble nickel compounds are normally compounds of nickel with a mono-dentate or bi-dentate organic ligands containing up to 20 carbon atoms. A ligand is an ion or molecule bound to and considered bonded to a metal atom or ion. Mono-dentate means having one position through which covalent or coordinate bonds with the metal may be formed. Bi-dentate means having two positions through which covalent or coordinate bonds with the metal may be formed. The term "soluble" refers to solubility in butadiene monomer and inert solvents.

Generally, any nickel salt or nickel containing organic acid containing from about 1 to 20 carbon atoms may be employed as the soluble nickel containing compound. Some representative examples of soluble nickel containing compounds include nickel benzoate, nickel acetate, nickel naphthenate, nickel octanoate, nickel neodecanoate, bis(α-furyl dioxime) nickel, nickel palmitate, nickel stearate, nickel acetylacetonate, nickel salicaldehyde, bis(cyclopentadiene) nickel, bis(salicylaldehyde) ethylene diimine nickel, cyclopentadienyl-nickel nitrosyl, bis(π-allyl nickel), bis(π cycloocta-1,5-diene), bis(π -allyl nickel trifluoroacetate), and nickel tetracarbonyl. The preferred component containing nickel is a nickel salt of a carboxylic acid or an organic complex compound of nickel. Nickel naphthenate, nickel octanoate, and nickel neodecanoate are highly preferred soluble nickel containing compounds. Nickel 2-ethylhexanoate, which is commonly referred to as nickel octanoate (NiOct) is the soluble nickel containing compound which is most commonly used due to economic factors.

The fluorine containing compound utilized in the catalyst system is generally hydrogen fluoride or boron trifluoride. If hydrogen fluoride is utilized, it can be in the gaseous or liquid state. It, of course, should be anhydrous and as pure as possible. The hydrogen fluoride can be dissolved in an inert solvent, and thus, can be handled and charged into the reaction zone as a liquid solution. Optionally, butadiene monomer can be utilized as the solvent. Inert solvents include alkyl-, alkaryl-, arylalkyl-, and aryl-hydrocarbons. For example, benzene and toluene are convenient solvents.

The boron trifluoride component of the catalyst can be gaseous boron trifluoride. It should also be anhydrous and as pure as possible.

The hydrogen fluoride and/or boron trifluoride can also be utilized as complexes in the catalyst system as the fluorine containing compound. Hydrogen fluoride complexes and boron trifluoride complexes can readily be made with compounds which contain an atom or radical which is capable of lending electrons to or sharing electrons with hydrogen fluoride or boron trifluoride. Compounds capable of such associating are ethers, alcohols, ketones, esters, nitriles and water.

The ketone subclass can be defined by the formula

$$R'-\overset{O}{\overset{\|}{C}}-R$$

wherein R′ and R are selected from the group consisting of alkyl radicals, cycloalkyl radicals, aryl radicals, alkaryl radicals, and arylalkyl radicals containing from 1 to about 30 carbon atoms; and wherein R′ and R can be the same or different. These ketones represent a class of compounds which have a carbon atom attached by a double bond to oxygen. Some representative examples of ketones that are useful in the preparation of the ketone-hydrogen fluoride complexes or boron trifluoride complexes of this invention include dimethyl ketone, methylethyl ketone, dibutyl ketone, methyl isobutyl ketone, ethyl octyl ketone, 2,4-pentanedione, butyl cycloheptanone, acetophenone, amylphenyl ketone, butylphenyl ketone, benzophenone, phenyltolyl ketone, quinone and the like. The preferred ketones that can be used to form the ketone-hydrogen fluoride compounds and the ketone-boron trifluoride compounds of this invention are the dialkyl ketones of which acetone is most preferred.

The nitrile subclass can be represented by the formula RCN where R represents alkyl groups, cycloalkyl groups, aryl groups, alkaryl groups or arylalkyl groups that contain up to about 30 carbon atoms. The nitriles contain a carbon atom attached to a nitrogen atom by a triple bond. Representative but not exhaustive of the nitrile subclass are acetonitrile, butyronitrile, acrylonitrile, benzonitrile, tolunitrile, phenylacetonitrile, and the like. The preferred hydrogen fluoride-nitrile complex or boron trifluoride nitrile complex is the hydrogen fluoride benzonitrile complex or the boron trifluoride benzonitrile complex.

The alcohol subclass can be defined by the formula ROH where R represents alkyl radicals, cycloalkyl radicals, aryl radicals, alkaryl radicals, or arylalkyl radicals containing from about 1 to about 30 carbon atoms. These alcohols represent a class of compounds which have a carbon atom attached by a single bond to oxygen which

is in turn attached to a hydrogen by a single bond. Representative but not exhaustive of the alcohols useful in the preparation of hydrogen fluoride complexes and boron trifluoride complexes are methanol, ethanol, n-propanol, isopropanol, phenol, benzyl alcohol, cyclohexanol, butanol, hexanol and pentanol. The preferred hydrogen fluoride-alcohol complex or boron trifluoride alcohol complex is hydrogen fluoride phenolate complex or boron trifluoride phenolate complex.

The ether subclass can be defined by the formula R'OR where R and R' represent alkyl radicals, cycloalkyl radicals, aryl radicals, alkaryl radicals, and arylalkyl radicals containing from about 1 to about 30 carbon atoms; wherein R and R' may be the same or dissimilar. The R may also be joined through a common carbon bond to form a cyclicether with the ether oxygen being an integral part of the cyclic structure such as tetrahydrofuran, furan or dioxane. These ethers represent a class of compounds which have two carbon atoms attached by single bonds to an oxygen atom. Representative but not exhaustive of the ethers useful in the preparation of the hydrogen fluoride complexes or boron trifluoride complexes of this invention are dimethyl ether, diethyl ether, dibutyl ether, diamyl ether, diisopropyl ethers, tetrahydrofuran, anisole, diphenyl ether, ethyl methyl ether, dibenzyl ether and the like. The preferred hydrogen fluoride-ether complexes or boron trifluoride-ether complexes are hydrogen fluoride diethyl etherate, hydrogen fluoride dibutyl etherate, boron trifluoride diethyl etherate, boron trifluoride dibutyl etherate complexes.

The ester subclass can be defined by the formula

$$R'-\overset{\overset{\displaystyle O}{\|}}{C}-O-R$$

wherein R and R' are selected from the group consisting of alkyl radicals, cycloalkyl radicals, aryl radicals, alkaryl radicals and arylalkyl radicals containing from 1 to about 20 carbon atoms. The esters contain a carbon atom attached by a double bond to an oxygen atom as indicated. Representative but not exhaustive of such esters are ethyl benzoate, amyl benzoate, phenyl acetate, phenyl benzoate and other esters conforming to the formula above. The preferred hydrogen fluoride-ester complex is hydrogen fluoride ethyl benzoate complex. The preferred boron trifluoride-ester complex is boron trifluoride ethyl benzoate complex.

The complexes of this invention are usually prepared by simply bubbling gaseous boron trifluoride or hydrogen fluoride into appropriate amounts of the complexing agent, for instance, a ketone, an ether, an ester, an alcohol, or a nitrile. This should be done in the absence of moisture, and measures should be taken to keep the temperature from rising above about 100°F (37.7°C). In most cases, boron trifluoride and hydrogen fluoride complexes are prepared with the temperature being maintained at room temperature. Another possible method would be to dissolve the hydrogen fluoride or the complexing agent in a suitable solvent followed by adding the other component. Still another method of mixing would be to dissolve the complexing agent in a solvent and simply bubble gaseous hydrogen fluoride or boron trifluoride through the system until all of the complexing agent is reacted with the hydrogen fluoride or boron trifluoride. The concentrations can be determined by weight gain or chemical titration.

The three component catalyst system utilized can be preformed. If the catalyst system is preformed, it will maintain a high level of activity over a long period of time. The utilization of such a preformed catalyst system also results in the formation of a uniform polymeric product. Such preformed catalyst systems are prepared in the presence of one or more preforming agents selected from the group consisting of monoolefins, nonconjugated diolefins, conjugated diolefins, cyclic nonconjugated multiolefins, acetylenic hydrocarbons, triolefins, vinyl ethers and aromatic nitriles.

Some representative examples of olefins that can be used as the preforming agent in the preparation of stabilized catalysts are trans-2-butene, mixed cis- and trans-2-pentene, and cis-2-pentene. Some nonconjugated diolefins that can be used as preforming agents are cis-1,4-hexadiene, 1,5-heptadiene, 1,7-octadiene, and the like. Representative examples of cyclic nonconjugated multiolefins that can be used include 1,5-cyclooctadiene, 1,5,9-cyclododecatriene, and 4-vinyl cyclohexene-1. Some representative examples of acetylenic hydrocarbons which can be used as the preforming agent are methyl acetylene, ethyl acetylene, 2-butyne, 1-pentyne, 2-pentyne, 1-octyne, and phenyl acetylene. Triolefins that can be used as the preforming agent include 1,3,5-hexatriene, 1,3,5-heptatriene, 1,3,6-octatriene, 5-methyl-1,3,6-heptatriene and the like. Some representative examples of substituted conjugated diolefins that can be used include 1,4-diphenyl butadiene, myrcene (7-methyl-3-methylene-1,6-octadiene), and the like. Ethyl vinyl ether and isobutyl vinyl ether are representative examples of alkyl vinyl ethers that can be used as the preforming agent. A representative example of an aromatic nitrile that can be used is benzonitrile. Some representative examples of conjugated diolefins that can be used include 1,3-butadiene, isoprene, and 1,3-pentadiene. The preferred preforming agent is 1,3-butadiene.

A method of preparing the preformed catalyst so that it will be highly active and relatively chemically stable

is to add the organoaluminum compound and the preforming agent to the solvent medium before they come into contact with the nickel compound. The nickel compound is then added to the solution and then the fluoride compound is added to the solution. As an alternative, the preforming agent and the nickel compound may be mixed, followed by the addition of the organoaluminum compound and then the fluoride compound. Other orders of addition may be used but they generally produce less satisfactory results.

The amount of preforming agent used to preform the catalyst may be within the range of about 0.001 to 3 percent of the total amount of monomer to be polymerized. Expressed as a mole ratio of preforming agent to nickel compound, the amount of preforming agent present during the preforming step can be within the range of about 1 to 3000 times the concentration of nickel. The preferred mole ratio of preforming agent to nickel is about 3:1 to 500:1.

These preformed catalysts have catalytic activity immediately after being prepared. However, it has been observed that a short aging period, for example 15 to 30 minutes, at a moderate temperature, for example 50°C, increases the activity of the preformed catalyst greatly.

In order to properly stabilize the catalyst, the preforming agent must be present before the organoaluminum compound has an opportunity to react with either the nickel compound or the fluoride compound. If the catalyst system is preformed without the presence of at least a small amount of preforming agent, the chemical effect of the organoaluminum upon the nickel compound or the fluoride compound is suchthat the catalytic activity of the catalyst is greatly lessened and shortly thereafter rendered inactive. In the presence of at least a small amount of preforming agent, the catalytic or shelf life of the catalyst is greatly improved over the system without any preforming agent present.

The three component nickel catalyst system used in the present invention can also be premixed. Such premixed catalyst systems are prepared in the presence of one or more polymeric catalyst stabilizers. The polymeric catalyst stabilizer can be in the form of a liquid polymer, a polymer cement, or a polymer solution. Polymeric catalyst stabilizers are generally homopolymers of conjugated dienes or copolymers of conjugated dienes with styrenes and methyl substituted styrenes. The diene monomers used in the preparation of polymeric catalyst stabilizers normally contain from 4 to about 12 carbon atoms. Some representative examples of conjugated diene monomers that can be utilized in making such polymeric catalyst stabilizers include isoprene, 1,3-butadiene, piperylene, 1,3-hexadiene, 1,3-heptadiene, 1,3-octadiene, 2,4-hexadiene, 2,4-heptadiene, 2,4-octadiene and 1,3-nonadiene. Also included are 2,3-dimethylbutadiene, 2,3-dimethyl-1,3-hexadiene, 2,3-dimethyl-1,3-heptadiene, 2,3-dimethyl-1,3-octadiene and 2,3-dimethyl-1,3-nonadiene and mixtures thereof.

Some representative examples of polymeric catalyst stabilizers include polyisoprene, polybutadiene, polypiperylene, copolymers of butadiene and styrene, copolymers of butadiene and α-methylstyrene, copolymers of isoprene and styrene, copolymers of isoprene and α-methylstyrene, copolymers of piperylene and styrene, copolymers of piperylene and α-methylstyrene, copolymers of 2,3-dimethyl-1,3-butadiene and styrene, copolymers of 2,3-dimethyl butadiene and α-methylstyrene, copolymers of butadiene and vinyltoluene, copolymers of 2,3-dimethyl-1,3-butadiene and vinyltoluene, copolymers of butadiene and β-methylstyrene, and copolymers of piperylene and β-methylstyrene.

In order to properly stabilize the catalyst system by this premixing technique, the polymeric catalyst stabilizer must be present before the organoaluminum compound has an opportunity to react with either the nickel compound or the fluorine containing compound. If the catalyst system is premixed without the presence of at least a small amount of polymeric catalyst stabilizer, the chemical effect of the organoaluminum compound upon the nickel compound or the fluoride compound is such that the catalytic activity of the catalyst system is greatly lessened and shortly thereafter rendered inactive. In the presence of at least a small amount of polymeric catalyst stabilizer, the catalytic or shelf life of the catalyst system is greatly improved over the same system without any polymeric catalyst stabilizer present.

One method of preparing this premixed catalyst system so that it will be highly active and relatively chemically stable is to add the organoaluminum compound to the polymer cement solution and mix thuroughly before the organoaluminum compound comes into contact with the nickel containing compound. The nickel compound is then added to the polymer cement solution. Alternatively, the nickel compound can be mixed with the polymer cement first, followed by the addition of the organoaluminum compound. Then the fluorine containing compound is added to the polymer cement solution. This is not intended to preclude other orders or methods of catalyst addition, but it is emphasized that the polymer stabilizer must be present before the organoaluminum compound has a chance to react with either the nickel containing compound or the fluorine containing compound.

The amount of polymeric catalyst stabilizer used to premix the catalyst system can be within the range of about 0.01 to 3 weight percent of the total amount monomer to be polymerized. Expressed as a weight ratio of polymeric catalyst stabilizer to nickel, the amount of polymeric catalyst stabilizer present during the premixing step can be within the range of about 2 to 2000 times the concentration of nickel. the preferred weight ratio of polymeric catalyst stabilizer to nickel is from about 4:1 to about 300:1. Even though such premixed catalyst

systems show catalytic activity immediately after being prepared, it has been observed that a short aging period, for example 15 to 30 minutes, at moderate temperatures, for example 50°C, increases the activity of the preformed catalyst system.

A "modified in situ" technique can also be used in making the three component nickel catalyst system. In fact, the utilization of catalysts made by such "modified in situ" techniques results in more uniform control of the polymerisation and the polymeric product. In such a "modified in situ" technique, the organoaluminum compound is added to neat 1,3-butadiene monomer with the nickel containing compound being added later. The butadiene monomer containing the organoaluminum compound and the nickel containing compound is then charged into the reaction zone being used for the polymerization with the fluorine containing compound being charged into the reaction zone separately. Normally, the organoaluminum compound and the nickel containing compound are charged into the reaction zone soon after being mixed into the butadiene monomer. In most cases, the organoaluminum compound and the nickel containing compound are charged into the reaction zone within 60 seconds after being mixed in the butadiene monomer. It will generally be desirable to utilize organoaluminum compounds and nickel containing compounds which have been dissolved in a suitable solvent.

The three component nickel catalyst systems utilized in the practice of the present invention have activity over a wide range of catalyst concentrations and catalyst component ratios. The three catalyst components interact to form the active catalyst system. As a result, the optimum concentration for any one component is very dependent upon the concentrations of each of the other two catalyst components. Furthermore, while polymerization will occur over a wide range of catalyst concentrations and ratios, the most desirable properties for the polymer being synthesized are obtained over a relatively narrow range. Bulk polymerizations can be carried out utilizing a mole ratio of the organoaluminum compound to the nickel containing compound within the range of from about 0.3:1 to about 300:1; with the mole ratio of the fluorine containing compound to the organonickel containing compound ranging from about 0.5:1 to about 200:1 and with the mole ratio of the fluorine containing compound to the organoaluminum compound ranging from about 0.4:1 to about 10:1. The preferred mole ratios of the organoaluminum compound to the nickel containing compound ranges from about 2:1 to about 80:1, the preferred mole ratio of the fluorine containing compound to the nickel containing compound ranges from about 3:1 to about 100:1, and the preferred mole ratio of tghe fluorine containing compound to the organoaluminum compound ranges from about 0.7:1 to about 7:1. The concentration of the catalyst system utilized in the reaction zone depends upon factors such as purity, the reaction rate desired, the polymerization temperature utilized, the reactor design, and other factors.

The three component nickel catalyst system is continuously charged into the reaction zone utilized in carrying out the bulk polymerization at a rate sufficient to maintain the desired catalyst concentration. The three catalyst components can be charged into the reaction zone "in situ", or as has been previously described, as a preformed or premixed catalyst system. In order to facilitate charging the catalyst components into the reaction zone "in situ" they can be dissolved in a small amount of an inert organic solvent or butadiene monomer. Preformed and premixed catalyst systems will, of course, already be dissolved in a solvent. A processing oil or mineral oil can be utilized as the solvent in applications wherein an oil extended rubber is being made. In such applications, the processing oil or mineral oil serves two purposes since it initially acts as a solvent for the catalyst components and then later acts as an extender oil.

One or more molecular weight regulators can also be continuously charged into the reaction zone. The molecular weight regulators which can be used include those which are known to be useful in solution polymerizations of 1,3-butadiene monomer which utilize nickel catalyst systems, such as those disclosed in U.S. Patent 4,383,097 and South African Patents 83/2555, 83/2557 and 83/2558, which are incorporated herein by reference. These molecular weight regulators are selected from the group consisting of α-olefins, cis-2-butene, trans-2-butene, allene, 1,4-pentadiene, 1,5-hexadiene, 1,6-heptadiene, 1,2,4-trivinylcyclohexene, 1-trans-4-hexadiene, and 4-vinyl-1-cyclohexene. The α-olefins that can be utilized generally contain from 2 to about 10 carbon atoms. Some representative examples of α-olefins that can be utilized for this purpose include ethylene, propylene, 1-butene, 1-pentene, and 1-hexene. 1-butene is a preferred molecular weight regulator. This is because it has a boiling point of -6.3°C which is very close to the boiling point of 1,3-butadiene (-4.5°C) and because it is effective as a molecular weight regulator at low concentrations and is not a poison to the polymerization catalyst even if its concentration increases markedly.

The amount of molecular weight regulator that needs to be employed varies with the type of molecular weight regulator being utilized, with the catalyst system, with the polymerization temperature, and with the desired molecular weight of the polymer being synthesized. For instance, if a high molecular weight polymer is desired, then a relatively small amount of molecular weight regulator is required. On the other hand, in order to reduce molecular weights substantially, relatively larger amounts of the molecular weight regulator will be utilized. Generally, greater amounts of the molecular weight regulator are required when the catalyst system

being utilized contains hydrogen fluoride or is an aged catalyst which contains boron trifluoride. Extremely effective molecular weight regulators, for example allene, can be used in lower concentrations and will nevertheless suppress molecular weights to the same degree as do more typical molecular weight regulators at higher concentrations. More specifically, allene will suppress the molecular weight of the polymer being synthesized in the bulk polymerization when utilized at concentrations as low as 0.005 phm (parts per hundred parts of monomer). Generally, the molecular weight regulator will be utilized at a concentration ranging between about 0.005 phm and 20 phm. It will normally be preferred for the molecular weight regulator to be utilized at a concentration of 0.1 phm to 15 phm with the most preferred concentration being between 1 phm and 10 phm.

The molecular weight regulator is continuously charged into the reaction zone at a rate sufficient to maintain the desired concentration of the molecular weight regulator in the reaction zone. Even though the molecular weight regulator is not consumed in the polymerization reaction, a certain amount of molecular weight regulator will need to be continuously added to compensate for losses. The total quantity of the 1,3-butadiene monomer, the catalyst system, and the molecular weight regulator charged into the reaction zone per unit time is essentially the same as the quantity of high cis-1,4-polybutadiene withdrawn from the reaction zone within that unit of time.

The reaction zone is constructed in such a way so as to provide constant agitation to its contents. It will also be constructed in a manner that will provide a means for sufficient evaporative cooling to maintain a temperature within the reaction zone of from about 10°C to about 130°C. Finally, a means for transporting the high cis-1,4-polybutadiene from the reaction zone will be included in the design of the reaction zone.

A reactor/extruder which is equipped with a means of reflux condensation can be designed so as to provide a good reaction zone. The screws and/or paddles within the extruder reactor provide agitation for the 1,3-butadiene monomer, the catalyst system, and the molecular weight regulator utilized in the polymerization. The screws also provide a means for transporting the polybutadiene produced from the reaction zone. Paddles can also be designed to push the polybutadiene being produced from the reaction zone. A means for evaporative cooling is required since it has been determined that a cooling jacket around the reaction zone is insufficient for heat control. The means for evaporative cooling can simply be one or more reflux columns. The condensate formed in the process of providing evaporative cooling can be allowed to simply return into the reaction zone, or it can be removed for purification and recycle. However, it will normally not be necessary to purify the condensate. Thus, at least a major portion of the condensate will generally be allowed to reflux back into the reaction zone.

Evaporative cooling is a very effective means of temperature control since the energy required to vaporize the liquid butadiene is very substantial (99.8 cal/g). It is also a self-regulating temperature control system since as temperatures get higher, there will be more evaporation, and thus, more cooling. This is the reason that evaporative cooling is sometimes referred to as autoretrigeration. An inert gas or nitrogen can be utilized to control the pressure within the reaction zone which in turn controls the amount of evaporative cooling that will occur. The pressure within the reaction zone will, of course, be controlled within a range that allows for the 1,3-butadiene within the reaction zone to be present in both the liquid state and as a vapor.

It is important for the reaction zone to be designed in a way that provides for self-cleaning. Such designs generally utilize a self-wiping action to clean the sides of the reactor, the paddles, and the extruder screws. Reactor/extruders that are equipped with multiple rotating shafts (screws and/or paddles) can be designed to be self-cleaning. Reactor/extruders which are equipped with intermeshing, co-rotating twin-screws provide such a self-cleaning action and can be designed so as to have a self-cleaning effect of approximately 90% or more. For that reason, they are an excellent choice for utilization in the bulk polymerizations of the present invention. Such reactor/extruders which are equipped with twin-screws also provide adequate agitation for the reactants as well as an excellent means for transporting the polybutadiene produced from the reaction zone.

The reaction zone will also be designed so as to provide an appropriate residence time. It will, of course, be advantageous to minimize residence times in order to maximize throughput. However, it will normally not be desirable to decrease residence times to the extent that it causes a drop in conversion of monomer to polymer. The optimal residence time will vary with the type of catalyst being utilized. For instance, it is possible to maintain shorter residence times in the reaction zone in cases where the catalyst system utilizes hydrogen fluoride as its fluorine containing compound than it is in cases where "slower" catalysts are utilized. It will normally be possible to adjust residence times in the reaction zone by controlling the rate at which the polybutadiene being produced is transported from the reaction zone. It has been determined that very short residence times of less than 20 minutes can be satisfactorily maintained and that the amount of free butadiene monomer in the reaction zone can be kept at a very low level. For example, the residence time utilized in the reaction zone will generally be from about 15 seconds to about 15 minutes with a residence time of about 30 seconds to about 10 minutes being used in most cases. It is generally preferred for the residence time in the reaction zone to be within the range of 1 minute to 5 minutes.

Since the bulk polymerization reaction is carried out under pressures greater than those outside of the reactor, it is normally desirable to design the reaction zone in a manner that will cause the polybutadiene exiting the reaction zone to plug the exit so as to prevent unpolymerized butadiene monomer from escaping. Alternatively, a mechanical apparatus, such as a restrictor valve, can be utilized to keep the reactants (butadiene monomer and molecular weight regulator) from escaping out of the reaction zone. Such a mechanical device can also be helpful during the start-up of the bulk polymerization process. During start-up, it is also possible to plug the exit of such extruder reactors with polybutadiene or some other suitable elastomeric material in order to hold back the reactants until enough bulk polymerized polybutadiene is generated to accomplish this purpose.

Since the polybutadiene being produced is essentially a solid material, it will normally not be possible to transport it from the reaction zone with standard centrifugal pumps. In very simplistic terms, a means for pushing the polybutadiene formed from the reaction zone will normally be required. This is in contrast to a means for transporting a solution or suspension of polymer from the reaction zone which is based on a pulling or pumping type of action. Reactor/extruders clearly provide the kind of pushing action necessary in order to transport the polybutadiene produced from the reaction zone.

The continuous bulk polymerization reactors used in the practive of this invention will normally contain at least three distinct zones. These zones are the feed zone, the reaction zone, and the transport zone. The 1,3-butadiene monomer and the nickel catalyst system being used are generally charged into the feed zone. The feed zone normally contains two or more co-rotating screws which quickly push the monomer and catalyst into the reaction zone. Thus, only a minimal amount of polymerization takes place in the feed zone. The polymerization is substantially completed in the reaction zone. The reaction zone contains screws, paddles, or some other type of agitators that will provide mixing and expose the polymerizing material to evaporative cooling. Co-rotating agitators having a lens-shaped cross sectional design have been found to be good for this purpose. The reaction zone is normally designed so as to be a neutral pumping region or so as to provide only a minimal amount of pumping action which pushes the polybutadiene being synthesized from the reaction zone into the transport zone. The transport region is designed to pull the polymer produced from the reaction zone. Co-rotation multiple screws are very effective for this purpose.

The continuous bulk polymerization reactor used can optionally contain a discharge zone. The discharge zone is designed to take the polybutadiene being produced from the transport region. It is also designed in a manner so that there is no back mixing into the transport region. A single screw works well in the discharge zone. Since there is no back mixing in the discharge zone, it is an advantageous point at which to add a short stop to the polymer. Other rubber chemicals, such as antioxidants, can of course also be added to the polybutadiene in the discharge zone.

As has been pointed out, the temperature within the reaction zone is regulated by evaporative cooling within a range of from about 10°C to about 130°C. Normally, however, it is preferred to utilize a temperature within the range of 20°C to 100°C. The most preferred temperature for carrying out the bulk polymerization reaction is 35°C to 85°C.

Flow rates into and out of the reaction zone are adjusted so as to attain a monomer conversion of at least about 60 percent. It is normally preferred to attain a conversion of at least 80 percent with conversion in excess of 90 percent being most preferred.

As the polybutadiene is exiting the reaction zone, it can be desirable to add shortstops, antidegradants, and/or other conventional rubber chemicals to it in the discharge zone. Mixing such rubber chemicals into the polybutadiene can be facilitated by first dissolving them in a processing oil or mineral oil if an oil extended polybutadiene is being prepared. Rosin acids and tall oils (abietic acids) are generally soluble in processing or mineral oils and function as shortstops. In cases where tread rubber is being prepared, from about 1 to about 10 weight percent of the processing oil can be mixed into the bulk polymerized polybutadiene. In situations where the rubber being made is to be utilized in tire white sidewalls, then about 1 to 3 percent of a mineral oil can generally be added. In any case, an adequate amount of extending oil can be added to facilitate the process of distributing the desired rubber chemicals throughout the polyhutadiene. In cases where large quantities of a processing or mineral oil are being added, it will normally be advantageous to utilize multiple co-rotating screws in order to insure adequate mixing. However, measures should be taken to prevent back mixing of the oil into the reaction zone.

After the bulk polymerized polymer has exited the reaction zone it may be necessary to devolatilize it. This can normally be accomplished by repetitively subjecting the polybutadiene to elevated temperatures and reduced pressures. This devolatilization process can be continued for as many cycles as are required to reduce the volatile materials in the polybutadiene to acceptable levels. However, devolatilization is not required unless unacceptably high levels of residual butadiene or other volatile materials are present in the polybutadiene. Thus, in cases where monomer conversions approach 100 percent and where less than 100 ppm (parts per million) of volatile organic compounds are present, devolatilization may not be required. However, it will normally be

desirable to reduce the amount of volatile organic compounds present to less than 10 ppm. A chemical means for reducing the level of volatile compounds present can, of course, be used in addition to or in place of a devolatilizer.

This invention is illustrated by the following examples. Unless specifically indicated otherwise, parts and percentages are given by weight.

A polymer's molecular weight can be designated in terms of dilute solution viscosity (DSV), inherent viscosity, Mooney viscosity, number average molecular weight ($M_n$) and weight average molecular weight ($M_w$). In the following examples dilute solution viscosities were determined in 0.1 to 0.5 weight percent toluene solutions at 30°C. Mooney viscosities were determined using a large rotor, a one minute warm-up time and a four minute running time at 100°C. The number and weight average molecular weights reported were determined using a Waters™ GPC Model No. 150C gel permeation chromatograph instrument with the polymers dissolved in chloroform.

Examples 1-5

A series of experiments were conducted to polymerize neat 1,3-butadiene in a List reactor utilizing aliquots of a preformed and aged catalyst. In these experiments, 47.5 g of dry, liquid 1-butene was charged as a molecular weight regulator into a 2.5 liter horizontal, cylindrical, steel reactor. Then 900 g of dry 1,3-butadiene monomer was added and the solution of butadiene and 1-butene was heated to 50°C and a pressure of 70 psig (3.8 x $10^5$ Pa). Later 93 ml of the catalyst was syringed into a metal cylinder and then bombed into the reactor. This reactor was a laboratory kneading reactor. Agitation was provided by radial disk shaped elements, which are attached to a rotating horizontal shaft, and which are equipped with mixing and kneading bars. Two rows of two stationary counter-paddles are attached to the inside wall of the cylinder in the areas not wiped by the mixing and kneading bars. The counter-paddles are set so as to scrape and clean the agitator shaft and its disk shaped elements. The interaction of the rotating disks and mixing bars with the counter-paddles provide the good kneading and mixing of the viscous polymer and catalyst, and later of the polymer with the polymer stabilizers, and at the same time provide self-cleaning of the metal surfaces.

One end of the horizontal cylinder is sealed with a flanged flat plate through the center of which a high torque drive mechanism is attached to the agitator shaft. A glass plate or site glass covers the other end of the cylinder. The maximum operating pressure is limited to 13 bars (1.3 x $10^6$ Pa) or less, and the maximum recommended temperature is 200°C. There is an electric heating jacket around the cylinder to warm it prior to initiating the bulk polymerization.

A cylindrical tube containing a cooling coil was mounted vertically on top of the reactor cylinder. Butadiene and other monomers or desired hydrocarbons are added to the reactor by "bombing" them through a valve and a line entering the bottom of this column and into the top of the reactor. The catalyst subsequently was charged through this same line. The coolant was toluene which was chilled in a dry ice-acetone bath and then circulated through the cooling coil. Monomers and other hydrocarbon vapors were condensed and flow back into the reactor from the cooling column. The reactor pressure (and simultaneously, the reactor temperature) was controlled within plus or minus 2 psig (1.4 x $10^4$ Pa) of the desired pressure by manually adjusting the pumping rate of the coolant flow. In this series of experiments pressure was maintained at 70 psig (3.8 x $10^5$ Pa) by manually controlling the flow of coolant through the reflux cooling coil.

A second line also enters near the bottom of the condensing (reflux) column and into the top of the reactor. Polymer stabilizers (stopping agent and antioxidant) are bombed into the reactor when it is desired to terminate the polymerization.

A discharge port with a valve has been installed in the bottom of the reactor to permit draining and charging of any solvents, catalyst solution added as a scavenger and/or butadiene utilized as a flush to rinse out the reactor.

A preformed three component nickel catalyst system was prepared and charged into the reactor along with 5 weight percent of 1-butene and the 1,3-butadiene monomer. The preformed catalyst was prepared by charging 25,468 g of hexane, 244 g of a 16% solution of 1,3-butadiene in hexane, 915 g of a 15% solution of triethylamininum in hexane, 35.3 g of a 10% solution of nickel octanoate in hexane, and 333.4 g of borontrifluoride·dibutyletherate into a nitrogen-flushed weigh tank. Thus, the solution formed contained 0.72 moles of 1,3-butadiene, 1.20 moles of triethylaluminum, 0.06 moles of nickel octanoate, and 1.68 moles of boron trifluoride. Approximately 800 ml of this catalyst suspension was transferred into a nitrogen-flushed, narrow mouth bottle which was sealed with a rubber liner and a perforated metal cap. The preformed catalyst was allowed to stand at room temperature (24°C) for five days prior to using any of it. This aging period results in the production of a higher molecular weight polymer than is produced when a freshly preformed catalyst is utilized. In this series of experiments, polymerization times were varied between 6 minutes and 20 minutes. The polymerization time utilized in each of the 5 experiments run is shown in Table I. The mononer conversion (yield), dilute solution viscosity (DSV) of the polybutadiene produced, the Mooney viscosity of the polybutadiene and the molecular weight of the polybutadiene were determined and are shown in Table I.

TABLE I

| Example | Polymerization Time, min. | Yield | DSV, dl/g | Mooney Viscosity, ML-4 | Molecular Wt. x $10^{-3}$ Mn | Mw |
|---|---|---|---|---|---|---|
| 1 | 6 | 12% | 4.22 | 82 | 271 | 791 |
| 2 | 9 | 32% | 4.27 | 98 | 259 | 789 |
| 3 | 9 | 40% | 4.17 | 105 | 259 | 743 |
| 4 | 16 | 52% | 4.24 | 99 | 239 | 778 |
| 5 | 20 | 64% | 3.98 | 103 | 238 | 721 |

As can be determined from Table I, Mooney viscosities were relatively constant at conversions above about 30%. Dilute solution viscosities were relatively constant at both low and relatively high conversions, as were molecular weights. These results show that the nickel catalyst system in combination with 1-butene as a molecular weight modifier produces high cis-1,4-polybutadiene having relatively constant molecular weight (Mooney viscosity of 102 ± 4) at conversions of greater than about 30 percent.

Examples 6-15

This group of experiments was conducted in order to investigate the effect of adding increasing amounts of 1-butene to the 1,3-butadiene being polymerized with the Mooney viscosity and the DSV of the polymers prepared being measured. The reactor and the general procedure described in Examples 1-5 was utilized in this series of experiments, except that the amount of molecular weight regulator utilized was varied as well as polymerization times. In fact, no molecular weight regulator was utilized in Examples 6-10. 1-butene was charged into the reactor in Examples 11-15 as a molecular weight regulator in the amounts shown in Table II.

In this group of experiments about 940 g of 1,3-butadiene was bombed into the List reactor for each run. A freshly preformed catalyst was prepared before each run in a dry, air-free, 118 ml glass bottle containing a small magnetic stirring bar by adding thereto 24.3 ml (16.0 g) of hexane, 1.5 ml (0.95 g) of 1,3-butadiene, 4.7 ml of a 0.5 M solution of triethylaluminum (TEAL) in hexane, 1.75 ml of a 0.1 M solution of nickel octanoate (NiOct) in pentane, and 9.5 ml of a 0.5 M solution of boron trifluoride· dibutyletherate ($BF_3 \cdot Bu_2O$). These catalyst components were agitated with the magnetic bar, and the bottles were placed in a beaker of ice water for a few minutes to keep the temperature at about 20°C to 30°C while the NiOct and $BF_3 \cdot Bu_2O$ solutions were being injected into a nitrogen-flushed metal cylinder fitted with a ball valve at each end. The performed catalyst suspensions were bombed into the reactor containing the butadiene monomer which had already been heated to 50°C and a pressure of 70 psig (3.8 x $10^5$ Pa).

The polymerizations were continued until only solid polybutadiene (actually polymer swollen with some butadiene monomer) was observed. The polymerizations were terminated by bombing in 6.75 g of resin acid and 6.75 g of dibutyl-para-cresol. Mixing was continued for ten minutes and then the polymer was devolatilized. The results are summarized in Table II which shows that as the amount of 1-butene charged was increased, both the Mooney viscosity of DSV declined.

TABLE II

| Example | 1-Butene Charged, Weight % | Polymerization Time, min. | Yield | Mooney Viscosity ML-4 | DSV, dl/g |
|---|---|---|---|---|---|
| 6 | 0 | 3 | 43% | 100 | 4.23 |
| 7 | 0 | 6 | 54% | 102 | 4.02 |
| 8 | 0 | 18 | 55% | 95 | 4.15 |
| 9 | 0 | 18 | 60% | 125 | ND |
| 10 | 0 | 25 | 70% | 122 | 3.67 |
| 11 | 1.5 | 13 | 72% | 115 | 3.24 |
| 12 | 3.0 | 22 | 49% | 85 | 2.50 |
| 13 | 4.8 | 50 | 69% | 62 | 2.42 |
| 14 | 5.1 | 22 | 77% | 61 | 2.42 |
| 15 | 8.0 | 24 | 71% | 46 | 2.07 |

ND = not done

catalyst charge - Bd/TEAL/NiOct/$BF_3 \cdot Bu_2O$ = 1.5/0.2/0.015/0.4 mmhgm or 0.055 phm

As can readily be seen, the molecular weight regulator utilized in Examples 7-15 effectively reduced the molecular weight of the polybutadiene produced in its presence. In fact, this series of experiments clearly shows that molecular weight can be regulated by the presence of 1-butene without limiting conversions.

Examples 16-22

This group of experiments was conducted in the reactor described in Examples 1-5. The polymerizations conducted in this series of experiments were terminated after different short intervals of time in order to prepare polymers at different degrees of conversion while utilizing a nickel catalyst system. The object of this group of experiments was to illustrate that a nickel catalyst produces polymers having a relatively uniform molecular weight over a wide range of monomer conversion.

In each of these experimental runs, 900 g of dry liquid 1,3-butadiene monomer were charged into the reactor. The temperature in the reactor was raised to 50°C, and the pressure was maintained at 70 psig (3.8 x $10^5$ Pa). Freshly preformed catalysts were prepared and added to the butadiene monomer for each run. The catalysts were prepared in dry nitrogen-flushed and capped 4-ounce (118 ml) bottles which contained a magnetic stirring bar by injecting the following components in the order listed: (1) 14 ml (9.3 g) of hexane, (2) 12 ml of a 20.5% solution of butadiene in hexane, (3) 10.1 ml of a 0.5 molar solution of triethylaluminum in hexane, (4) 3.4 ml of a 0.1 molar solution of nickel octanoate in pentane, and (5) 16.9 ml of a 0.5 molar solution of boron trifluoride· dibutyletherate in hexane. The catalyst components were stirred in the capped bottles with the magnetic bar and the temperature was controlled at between about 20°C and 30°C while adding the nickel octanoate and boron trifluoride·dibutyletherate components by setting the bottles containing the preformed catalyst in ice water on a magnetic stirrer. 45 ml of the preformed catalyst were injected by syringe into a metal bomb. The fresh preformed catalysts were bombed into the reactor utilizing nitrogen pressure within 5 to 15 minutes after their preparation.

The intended catalyst charges were 2.62 mmhgm (millimoles per 100 grams of monomer) of butadiene monomer, 0.45 mmhgm of triethylaluminum, 0.03 mmhgm of nickel octanoate, and 0.75 mmhgm of boron trifluoride·dibutyletherate. This was 0.115 phm (parts per hundred parts of monomer) of TEAL, NiOct, and $BF_3$.

Polymerization started almost immediately after addition of the catalysts to the reactor. The pressure within the reactor was controlled at 70 ± 2 psig (3.8 x $10^5$ ± 1.4 x $10^4$ Pa), and this controlled the temperature at 50

± 2°C, by manually controlling the rate of coolant flowing through the cooling coil. This condensed evaporated butadiene monomer and recycled it to the reaction zone.

The polymerizations were terminated by bombing a solution containing 6.75 g of wood resin acid and 6.75 g of dibutyl-para-cresol dissolved in 200 g of liquid butadiene into the reactor and mixing it with the polybutadiene for 10 minutes. The results of this group of experiments are shown in Table III.

TABLE III

| Example | Polymerization Time, min. | % Conversion | Mooney Viscosity ML-4 | DSV, dl/g | Molecular Weight x $10^3$ Mn | Mw | H.I. |
|---|---|---|---|---|---|---|---|
| 16 | 2.25 | 13 | 95 | 3.26 | 205 | 646 | 3.2 |
| 17 | 1.5 | 18 | 102 | 3.04 | 174 | 631 | 3.8 |
| 18 | 3 | 36 | 98 | 3.18 | 178 | 618 | 3.5 |
| 19 | 6 | 60.5 | 115 | 3.55 | 190 | 729 | 3.8 |
| 20 | 3 | 63.5 | 124 | 3.41 | 198 | 654 | 3.3 |
| 21 | 6 | 71 | 114 | 3.59 | 216 | 744 | 3.5 |
| 22 | 30 | 92.5 | 125 | 3.24 | 163 | 576 | 3.5 |

Polymer molecular weight increased sharply until a conversion of 13% was attained, and perhaps gradually until a conversion of about 40% was attained. As can be seen, at conversions from about 40% to 90%, the molecular weight remained almost uniform, with Mooney viscosities being 120 ± 5. These results illustrate that the nickel catalyst system with its chain transfer mechanism produces polybutadiene which has a relatively constant or uniform molecular weight above a conversion level of approximately 40 percent. The polymer's molecular weight does not increase with either increased conversion or increased polymerization time, as occurs when a "living" or "pseudoliving" catalyst system is utilized. The microstructure of the polybutadienes prepared in these experiments were also very uniform. For example, the FTIR (Fourier Transform Infrared) analysis using a Nicolet 20 SX Spectro-photometer for each of the polybutadienes prepared in Examples 17 and 22 were 98% cis-1,4-, 1% trans-1,4-, and 1% 1,2-polybutadiene.

Examples 23-27

The effect of adding increasing amounts of 1-butene as a molecular weight regulator upon the Mooney viscosity of polybutadiene prepared in the reactor described in Examples 1-5 while using a preformed nickel catalyst system was investigates in this series of experiments. The polymerization procedure utilized was very similar to the one described in Examples 6-15. In the procedures used in this series of experiments, 900 g of 1,3-butadiene monomer plus either 6, 8, or about 10% of 1-butene, as is shown in column 2 of Table IV, were charged into the reactor and then heated to a temperature of 50°C and a pressure of 70 psig (3.8 x $10^5$ Pa).

The performed catalysts utilized in this series of experiments were charged into the List reactor approximately 30 minutes after their preparation. These performed catalysts were prepared in capped 118 ml bottles with mixing provided by a magnetic stirring bar. The catalyst components were injected with a syringue in the following order: (1) 1,3-butadiene in hexane, (2) a 25 weight percent (0.87 molar) solution of triisobutylaluminum (TIBAL) in hexane, (3) either a 0.05 or a 0.1 molar solution of nickel octanoate in hexane, and (4) a 0.50 molar solution of $HF{\cdot}Bu_2O$ in hexane. Approximately 0.16 phm of this catalyst system was utilized to initiate the polymerizations. The catalyst system prepared utilized about 0.60 mmhgm of TIBAL, about 0.025 mmhgm of NiOct, and about 1.5 mmhgm of $HF{\cdot}Bu_2O$.

The results of this series of experiments are reported in Table IV. As can be readily seen, as the amount of 1-butene present increased, the Mooney viscosities of the polymers prepared were lower.

TABLE IV

| Example | Concentration of 1-butene | Polymerization Time, min. | Yield | Mooney Viscosity ML-4 | DSV, dl/g |
|---|---|---|---|---|---|
| 23 | 6% | 8 | 61% | 114 | 3.45 |
| 24 | 8% | 9 | 67.5% | 101 | 3.14 |
| 25 | 8% | 13 | 45% | 99 | 3.30 |
| 26 | 10% | 25 | 70% | 75 | 3.10 |
| 27 | 9.9% | 21 | 92% | 63 | ND |

ND - not done

Examples 28-33

This group of experiments was performed utilizing the reactor described in examples 1-5. In this group of experiments, 6% 1-butene was added to 900 g of dry 1,3-butadiene which was polymerized in each of the runs. Nickel catalysts were prepared separately for each run. These preformed catalysts were prepared by adding and mixing the following components in a 4-ounce (118 ml) capped bottle: (1) 18.7 ml of hexane, (2) 13.3 ml of a 20.5 weight percent solution of 1,3-butadiene in hexane, (3) 9.2 ml of a 0.87 molar solution of triisobutylaluminum in hexane, (4) 4.0 ml of a 0.05 molar solution of nickel octanoate in hexane, and (5) 41.7 ml of a 0.48 molar solution of hydrogen fluoride·dibutyletherate in hexane. These catalysts were allowed to stand for about 18 hours at 24°C to age and then 78 ml were withdrawn and bombed into the reactor containing the 1,3-butadiene and 1-butene at 50°C. The catalyst level charged was 0.48 mmhgm of TIBAL, 0.012 mmhgm of NiOct, and 1.2 mmhgm of $HF \cdot Bu_2O$. Thus, the amount of catalyst (TIBAL, NiOct, and HF) utilized was approximately 0.123 phm.

The main variable in this group of experiments was the percentage of conversion (or polybutadiene yield which is reported in column 4 of Table V). Each polymerization in this series of experiments was intentionally terminated by bombing in the stabilizer solution of resin acid and dibutyl-para-cresol in liquid butadiene. The results of this series of experiments are reported in Table V and illustrate that the nickel catalyst system utilized produces polybutadienes in the presence of 1-butene which have relatively uniform or consistent Mooney viscosities of 102 ± 5 over a wide range of conversions.

TABLE V

| Example | Concentration of 1-butene | Polymerization Time, min. | Yield | Mooney Viscosity ML-4 | $Mn \times 10^{-3}$ |
|---|---|---|---|---|---|
| 28 | 6.0% | 10 | 20% | 100 | 241 |
| 29 | 6.1% | 8 | 37% | 102 | 298 |
| 30 | 6.1% | 20 | 60% | 104 | 283 |
| 31 | 5.8% | 20 | 68% | 107 | 295 |
| 32 | 6.0% | 20 | 74% | 105 | 216 |
| 33 | 5.9% | 25 | 90% | 97 | 286 |

Examples 34-36

This group of experiments was conducted as comparative examples in order to illustrate difficulties which are encountered while using neodymium based catalyst systems. The neodymium system utilized in this group of experiments was prepared in a dry nitrogen-flushed and capped 8-ounce (230 ml) narrow mouthed bottle which contained a magnetic stirring bar by injecting the following components with syringes in the following order: (1) 52 ml of an 18.8 weight percent solution of butadiene in hexane, (2) 120 ml of a 25 weight percent solution of diisobutylaluminum hydride in hexane, (3) 11.2 ml of a 10.7 weight percent solution of neodymium octanoate in hexane, and (4) 5 ml of a 25 weight percent solution of ethylaluminum dichloride in hexane. The catalyst components in the bottle were stirred continuously with the aid of a magnetic stirrer while slowly adding the neodymium octanoate and the ethylaluminum dichloride. Since the solution formed became warm while adding the neodymium octanoate, the bottle was placed in a beaker of ice water sitting on the magnetic stirrer in order to control the temperature between about 20°C and 30°C while adding the neodymium octanoate and the ethylaluminum dichloride. The preformed solution prepared was allowed to "age" while standing at room temperature for over two weeks (384 hours).

The 1,3-butadiene was polymerized in the reactor using a procedure very similar to the one described in Examples 1-5. Thus, the reactor was warmed to 50°C and a pressure of about 70 psig (3.8 x $10^5$ Pa). Then, 31 ml of the aged preformed neodymium catalyst system was charged into the List reactor. No molecular weight regulator was utilized in Examples 34 and 35. However, 11.2 weight percent of 1-butene, based upon the total amount of unsaturated hydrocarbons present, was utilized as a molecular weight regulator in Example 36. The amount of catalyst charged in each of the runs in this group of experiments was calculated to be about 2.6 mmhgm of diisobutylaluminum hydride, 0.135 mmhgm of neodymium octanoate, and 0.135 mmhgm of ethylaluminum dichloride.

In this group of experiments, the temperature was manually controlled at 50°C ± 2°C by controlling the rate of coolant flowing through the cooling coil which condensed the evaporating butadiene vapor and let it recycle back into the reactor. The results of this group of experiments are summarized in Table VI.

TABLE VI

| Example | Concentration of 1-butene | Polymerization Time, min. | Yield | Mooney Viscosity ML-4 |
|---|---|---|---|---|
| 34 | 0% | 5 | 60% | 27 |
| 35 | 0% | 13 | 89% | 62 |
| 36 | 11.2% | 18 | 80% | 74 |

The polymerization rate observed in Example 36, which was conducted in the presence of 1-butene, was observed to be somewhat lower than the rate of polymerization obtained in Examples 34 and 35. For this reason, the polymerization in Example 36 was allowed to continue for a total of 18 minutes before it was terminated. The polymerizations in this series of experiments were intentionally teminated after the specified polymerization times by adding 7 ml of 2,4,6-tris-(dimethylaminoethyl)phenol and 6.75 g of dibutyl-para-cresol, which were dissolved in 200 g of liquid butadiene plus 5 ml of isopropanol.

This group of experiments illustrates that the molecular weight (Mooney viscosity) of the polymer attained while using neodymium catalyst systems is a function of the degree of conversion and/or duration of the polymerization. This is, of course, in contrast to bulk polymerizations which utilize the nickel catalyst systems of the present invention since their use results in a polymer having a relatively uniform molecular weight which is not dependent upon the polymerization time utilized. Example 36 illustrates the fact that polybutadiene produced in bulk polymerizations while using a neodymium catalyst system cannot be lowered or regulated by the addition of 1-butene. Thus, it is not possible to prepare polymers having the same molecular weight and molecular weight distribution at different conversion levels while using neodymium (or other rare earth) catalyst systems in continuous polymerizations of neat 1,3-butadiene. It is very important to have the ability to prepare such polymers so that they will have uniform or consistent processibility and physical properties. This is a unique advantage which can be attained by utilizing the nickel catalyst system of the present invention since high conversions can be attained while using it and at the same time molecular weights can be regulated by using a molecular weight regulator such as 1-butene.

Examples 37-39

This group of experiments was performed using the reactor described in Examples 1-5. The polymerization temperature for these experiments was 60°C. The preformed catalysts used were prepared in a manner similar to that described in Examples 28-33, except that a higher catalyst level was charged in this group of experiments. The catalyst level utilized in this group of experiments was 0.80 mmhgm of TIBAL, 0.02 mmhgm of NiOct and 2.0 mmhgm of $HF \cdot Bu_2O$.

The primary or most significant difference in the conditions utilized in this set of experiments was that the 1,3-butadiene monomer used in Example 39 was not freshly distilled prior to charging it into the reactor. Vapor phase chromatographic analysis of a sample of this butadiene revealed that it contained about 3500 ppm of 4-vinyl-1-cyclohexane (butadiene dimer). Examples 37 and 38 were conducted utilizing conditions similar to those used in Example 39 except that the butadiene was freshly distilled and contained virtually no butadiene dimer.

The results of this group of experiments are summarized in Table VII. The combination of 1-butene and 4-vinyl-1-cyclohexane present in Example 39 resulted in a significant lowering of the molecular weight to a Mooney viscosity of 65 versus 98 which was obtained for the polymers prepared in the presence of only 1-butene as a chain transfer agent. Perhaps there is a synergistic effect that 4-vinyl-1-cyclohexane has on 1-butene as a molecular weight regulator.

TABLE VII

| Example | 1-butene wt % | Polymerization Time, min. | Conversion | Mooney Viscosity | DSV, dl/g |
|---|---|---|---|---|---|
| 37 | 6.1 | 16.0 | 69 | 98 | 5.02 |
| 38 | 6.2 | 6.5 | 46 | 98 | 4.3 |
| 39 | 6.0 | 5.5 | 71.5 | 65 | 2.75 |

Examples 40-45

Butadiene monomer was dried by passing it as a vapor through a column of calcium sulfate. 100 g of butadiene were charged into each of a series of six dry, nitrogen-flushed, narrow mouthed, quart (about 960 ml) bottles which contained a magnetic stirring bar. The bottles were sealed with a rubber gasket and a perforated metal crown cap. Liquid 1-butene was injected through the rubber gasket into the butadiene monomer using a syringe fitted with a stopcock. The amount of 1-butene charged into each bottle is listed in the second column of Table VIII.

The three catalyst components were injected through the rubber liners by the "in situ" method as follows: (1) 0.5 ml of a 0.5 molar triethylaluminum in hexane solution, (2) 0.3 ml of either a 0.05 m solution of nickel octanoate or nickel naphthanate in hexane, and (3) 0.6 ml of a 0.5 m solution of boron trifluoride dibutyletherate in pentane. The contents of these bottles were shaken and then set in a 45°C water bath above a magnetic stirrer. Stirring stopped after about 15 minutes due to high viscosity. There initially appeared to be small insoluble solid particles of polymer in the monomer (two phases), but viscosity increased rather rapidly, and there may have been only a single phase. Butadiene apparently diffused rapidly through the polymer to the catalyst. A solid mass of polymer which was swollen somewhat with unreacted monomer was present after one hour of polymerization. There were a few (3-10) ml of liquid at the top of the solid polymer. 20 ml of hexane containing 5 weight/volume percent resin acid and 2,6-di-tert-butyl-para-cresol was injected into the polymers made in Examples 42, 43 and 45 after one hour and into the other three polymers (Examples 40, 41 and 44) after two hours in order to terminate the polymerizations. The polymers were dried in air under a vacuum to remove any unpolymerized butadiene, the 1-butene, the hexane, and the pentane. Polymer yields, as well as indications of polymer molecular weight (Mooney viscosity and DSV), are presented in Table VIII.

TABLE VIII

| Example | 1-butene weight % | Yield | Mooney Viscosity | DSV, dl/g | Gel, weight % |
|---|---|---|---|---|---|
| 40 | 0 | 90 | 114 | 4.1 | 5 |
| 41 | 2.7 | 95 | 76 | 2.9 | 0 |
| 42 | 2.7 | 79 | 77 | 3.0 | 0 |
| 43 | 5.6 | 80 | 52 | 2.6 | 0 |
| 44 | 8.5 | 89 | 40 | 2.45 | 1 |
| 45 | 8.4 | 74 | 33 | 2.5 | 10 |

Yields obtained during one hour of polymerization were 74-80% vs. 89-95% which were obtained after two hours. The degree of conversion in this range did not affect either the Mooney viscosities or the dilute solution viscosities (compare the results of Example 41 with Example 42 and the results of Example 44 with Example 45), and the polymers were essentially gel-free. On the other hand, both measures of viscosity declined with increasing amounts of 1-butene charged.

Example 46

A reactor/extruder unit containing two parallel agitator shafts arranged in an over/under fashion was utilized in this experiment. Both agitators were 4 in. (10.2 cm) in diameter and were anchored by a pair of tapered thrust bearings and entered the reactor through hydraulically pressured oil seals. The 32 in. (81 cm) and 48 in. (122 cm) long shafts were made of four regions. The first region was an 8 in. (20 cm) long transport region with tight deep flights at the rear of each agitator which efficiently conveys material downstream, away from the oil seal face toward the reaction zone. The second region was a 21 in. (53 cm) long reaction zone which allows for plug transport. This section was composed of 21 - 1 in. (2.54 cm) wide paddles keyed onto a shaft with each paddle orientation being offset 15° from the preceding paddle. This design results in a gradual 360° single helix on each agitator along the length of the 21 in. (53.3 cm) reaction zone. The third region which acted as the transport zone contained a short 3 in. (7.6 cm) long deeply grooved flight. It transported the polymer being produced away from the reaction zone. The fourth region which acted as a discharge zone was comprised of a single 16 in. (40.6 cm) long, 2 in. (5.1 cm) diameter discharge screw with a shallow single flight which was 0.09 in. (0.23 cm) deep. This single screw was attached directly to the lower of the agitator shafts. The top agitator shaft extended through the transport region, the reaction zone, and the transport zone; but did not extend into the discharge zone.

The reactor/extruder was designed so that the agitators would wipe polymer from the reactor walls and the other agitator. The reactor itself is housed by a two-compartment jacket and a third jacket encompasses the single discharge screw. The two reactor jacket segments were coupled and connected to a refrigerant coolant/steam heat exchanger which allowed for temperature control between 25°F (-4°C) and 250°F (121°C). This capacity was only used for heating during start-up and cooling during shut-down. The single screw jacket was linked directly to a refrigerant supply and only had cooling capabilities. Some cooling was required during operation to remove the heat which resulted from the mechanical work input by the single discharge screw in the discharge zone. The reaction zone had a volume of 6 liters, approximately 4 liters of which served as actual working volume to allow for a 2 liter vapor space in the reactor. The unit was driven by a variable speed belt drive powered by a 10 horsepower motor. Power draw was monitored with an in-line watt meter. The drive was capable of delivering from 29 rpm to 230 rpm although the design of the discharge screw was such that there was no increase in throughput capacity realized at speeds greater than 70 rpm. The internal temperature was monitored at four points along the reactor with thermocouples mounted flush with the reactor interior walls. A gauge fitted at the die flange allowed for extruder pressure to be monitored. A mechanical ball valve was installed at the end of the discharge zone so that the exit orifice could be throttled or completely closed.

A key component of the reactor/extruder used in this experiment was its reflux cooling capacity which was capable of removing the 622 BTU of heat generated per pound of polybutadiene produced (18.7 kcal/mole).

This cooling capacity was provided by a reflux system which consisted of a vertical condenser mounted directly above the reaction zone. Its design allowed for vapors to be condensed and returned to the reaction zone at a rate equivalent to their generation.

The catalyst used in this experiment was preformed in an agitated 30 gallon (114 liter) tank. Each of the catalyst components were weighed and transported to the tank in metal cylinders. The tank was pre-filled with about 60 pounds (27.2 kg) of dry toluene and each of the catalyst components were charged into the tank in the following order: 1,3-butadiene (as the preforming agent), triethylaluminum, nickel octanoate, and boron trifluoride. After all of the catalyst components were added more toluene was added in order to bring the final concentration of active catalyst components in toluene to 2% by weight. The mole ratio of butadiene/TEAL/NiOct/$BF_3 \cdot Et_2O$ was 25/9.6/1.0/8.3. Agitation was maintained in the tank containing the catalyst solution during catalyst make-up, during the aging period, and during the period that the catalyst was being used. The catalyst was aged for over 24 hours before it was used.

The reactor/extruder was used in making high cis-1,4-polybutadiene in a continuous process. An average of 13 pounds (5.9 kg) per hour of neat 1,3-butadiene containing 1.5% 1-butene was continuously charged into the reactor/extruder for 25 hours. The catalyst suspension prepared was charged into the feed zone of the reactor/extruder at an average rate of 1.6 pounds (0.73 kg) per hour so as to provide an intended catalyst charge level of 1.15 mmhgm of TEAL, 0.12 mmhgm of NiOct and 1.0 mmhgm of $BF_3 \cdot Et_2O$ for a total catalyst charge of 0.246 phm. The polymerization temperature maintained in the reaction zone was 69 ± 2°C.

The polymer production rate was constant, but mechanically limited to approximately 12 lbs. (5.4 kg) per hour. It was estimated that there was an 11-14 min. residence time in the reactor/ extruder. Notwithstanding this very short reaction period, the solids content of the extruded product ranged from 71-79%. This corresponded to a monomer conversion of 87-97%. A headspace analysis of a typical extrudate revealed that toluene, the catalyst carrier, comprised 58% of the hydrocarbon in the sample, hexane, the shortstop and antioxidant carrier, 32%, and butadiene, only 8%. Steam stripping, and therefore dewatering and drying of the polymer, and drying of any unreacted monomer were not necessary. The small amount of residual hydrocarbon in the polymer was removed by passing it through in extruder/devolatilizer.

Polybutadiene of constant quality was produced at a steady rate. Table IX illustrates that a polymer having a Mooney viscosity of 56 was produced with a standard deviation of only 3.9. Similarly, an 11.54 lb. per hour production rate was maintained with a 0.45 lb. per hour standard deviation. The dilute solution viscosity of the polymer was somewhat low, but was also very consistent, averaging 2.85 with a standard deviation of 0.12.

TABLE IX

CONTINUOUS OPERATION SUMMARY

| PROCESS | MIN. | MAX. | AVE. | σn |
|---|---|---|---|---|
| Production Rate (lb/hr) | 10.60 | 12.38 | 11.54 | 0.45 |
| Butene-1 Level (%) | - | - | 1.5 | - |
| Catalyst Level (phm) | 0.20 | 0.34 | 0.26 | 0.03 |
| Shortstop Level (phr) | 0.69 | 1.86 | 1.30 | 0.27 |
| Antioxidant Level (phr) | 0.81 | 1.98 | 1.19 | 0.23 |
| Mean Reactor Temp. (°F) | 149.0 | 161.2 | 155.6 | - |
| Reactor Pressure (psig) | 106.0 | 114.0 | 111.7 | - |
| Screw Speed (rpm) | 62 | 68 | 68 | - |
| Residence Time (min.) | 10.7 | 13.6 | 12.0 | 0.55 |
| Butadiene Conversion (%) | 87.3 | 97.3 | 92.3 | - |

| PRODUCT | MIN. | MAX. | AVE. | σn |
|---|---|---|---|---|
| Mooney Viscosity | 46.0 | 65.0 | 56.0 | 3.9 |
| DSV | 2.68 | 3.09 | 2.85 | 0.12 |
| Gel (%) | 0.85 | 4.04 | 2.21 | 0.96 |
| ML/DSV | 17.2 | 21.1 | 19.7 | - |

σn = standard deviation

During 25 hours of operation, 265 lbs. of high cis-1,4-polybutadiene were produced with no steam consumption whatsoever. The physical properties of the polymer produced were equivalent to those of polybutadiene made in solution utilizing the same catalyst. Mechanically, the power consumption of the reactor/extruder was directly related to both the product viscosity and the production rate. At a rate of 11.54 lbs. (5.2 kg) per hour for a polymer having a Mooney viscosity of 56.5 at a given solids level, the reactor/extruder used an average of 3.5 kilowatts. This rate corresponds to a work input of roughly 0.30 kilowatt hours per pound of polymer, or only 30% of peak draw for the ten horsepower motor.

While certain representative embodiments and details have been shown for the purpose of illustrating the present invention, it will be apparent to those skilled in this art that various changes and modifications can be made therein without departing from the scope of the invention.

## Claims

1. A method for bulk polymerizing 1,3-butadiene into high cis-1,4-polybutadiene in a continuous process comprising:

(1) charging said 1,3-butadiene; a catalyst system comprising (a) an organoaluminum compound, (b) a soluble nickel containing compound and (c) a fluorine containing compound selected from the group consisting of hydrogen fluoride, boron trifluoride, hydrogen fluoride complexes and boron trifluoride complex, wherein the mole ratio of the organoaluminum compound to the nickel containing compound ranges from about 2:1 to about 80:1, wherein the mole ratio of the fluorine containing compound to the nickel containing compound ranges from about 3:1 to about 100:1, into a self-cleaning reactor/extruder which contains a reaction zone and a transport zone;

(2) allowing said 1,3-butadiene to polymerize into high cis-1,4-polybutadiene in said reaction zone to a conversion of at least 60 percent while utilizing conditions under which there is sufficient evaporative cooling in said reaction zone to maintain a temperature within the range of 10°C to 130°C, wherein the residence time in the reaction zone is within the range of about 1 minute to about 5 minutes, wherein the reaction zone is equipped with co-rotating agitators having a lens-shaped cross sectional design which provide mixing, wherein the reaction zone is designed to a neutral pumping region or to provide only a minimal amount of pumping action and wherein the transport zone is equipped with at least 2 co-rotating screws; and
(3) continuously withdrawing said high cis-1,4-polybutadiene from said reaction zone wherein at least 85% of the butadiene repeat units in said high cis-1,4-polybutadiene are of the cis-1,4-isomeric structure.

2. A method as specified in claim 1 further characterized by charging at least one molecular weight regulator into said reaction medium.

3. A method as specified in claim 2 characterized in that said molecular weight regulator is an α-olefin.

4. A method as specified in claim 1, 2 or 3 characterized in that said reaction medium is maintained at a temperature within the range of 20°C to 100°C.

5. A method as specified in claim 3 characterized in that said reactor/extruder is a self-cleaning reactor/extruder having a self-cleaning effect of at least 90 percent; characterized in that said α-olefin is present in said reaction medium at a concentration of 0.1 phm to 15 phm; characterized in that said reaction medium is maintained at a temperature within the range of 35°C to 85°C; characterized in that said organoaluminum compound is selected from the group consisting of triethylaluminum, tri-n-propylaluminum, triisobutylaluminum, trihexylaluminum, diisobutylaluminum hydride, and diethylaluminum fluoride; and characterized in that said soluble nickel containing compound is selected from the group consisting of nickel naphthenate, nickel octanoate, and nickel neodecanoate.

6. A method as specified in any of the preceding claims further characterized by adding a rubber chemical to the high cis-1,4-polybutadiene after it is withdrawn from said reaction zone.

7. A method as specified in claim 6 characterized in that said rubber chemical is dissolved in a processing oil or a mineral oil.

8. A method as specified in claim 7 characterized in that from 1 to 10 weight percent of said processing oil or said mineral oil is mixed into the high cis-1,4-polybutadiene, based upon the weight of said high cis-1,4-polybutadiene.

9. A method as specified in any of the preceding claims further characterized by devolatilizing said high cis-1,4-polybutadiene after it has exited the reaction zone.

10. A method as specified in claim 7 or 8 characterized in that the rubber chemical is an antidegradant or a shortstop.

11. A method as specified in claim 1 characterized in that said, 1,3-butadiene is allowed to polymerize into high cis-1,4-polybutadiene in said reaction zone to a conversion of at least 90 percent.

**Patentansprüche**

1. Verfahren zur Massenpolymerisation von 1,3-Butadien zu hohem cis-1,4-Polybutadien in einem kontinuierlichen Verfahren, bei dem man:
(1) das 1,3-Butadien; ein Katalysatorsystem, enthaltend (a) eine aluminiümorganische Verbindung, (b) eine lösliche, nickelhaltige Verbindung und (c) eine fluorhaltige Verbindung, ausgewählt aus Fluorwasserstoff, Bortrifluorid, Fluorwasserstoff-Komplexe und Bortrifluorid-Komplexe, wobei das Molverhältnis der aluminiumorganischen Verbindung zur nickelhaltigen Verbindung von etwa 2:1 bis etwa 80:1 reicht, wobei das Molverhältnis der fluorhaltigen Verbindung zur nickelhaltigen Verbindung von etwa 3:1 bis etwa 100:1 reicht, in einen selbstreinigenden Reaktor/Extruder einbringt, der eine Reaktionszone und eine Transportzone enthält;
(2) das 1,3-Butadien in der Reaktionszone bei einer Umwandlung von mindestens 60 % in hohes cis-1,4-Polybutadien polymerisieren lädt, wobei man Bedingungen einsetzt, unter denen in der Reaktionszone zum Aufrechterhalten einer Temperatur innerhalb des Bereiches von 10 bis 130 °C eine ausreichende Verdampfungskühlung gegeben ist, wobei die Verweilzeit in der Reaktionszone innerhalb des Bereiches von etwa einer bis etwa fünf Minuten liegt, wobei die Reaktionszone mit mischenden, gleichschnell drehenden Bewegern mit linsenförmigem Querschnittsbau ausgerüstet ist, wobei die Reaktionszone als neutraler Pumpbereich oder derart gebaut ist, daß sie nur zu wenig Pumpen führt, und wobei die Transportzone mit mindestens zwei gleichschnell drehenden Schnecken ausgerüstet ist; und
(3) das hohe cis-1,4-Polybutadien kontinuierlich aus der Reaktionszone abzieht, wobei mindestens 85 % der Butadien-Wiederholungseinheiten in dem hohen cis-1,4-Polybutadien die Struktur des cis-1,4-Isomeren aufweisen.

2. Verfahren nach Anspruch 1, dadurch gekennzeichnet, daß man mindestens einen Molekulargewichtsregler in das Reaktionsmedium einführt.

3. Verfahren nach Anspruch 2, dadurch gekennzeichnet, daß der Molekulargewichtsregler ein α-Olefin ist.

4. Verfahren nach Anspruch 1, 2 oder 3, dadurch gekennzeichnet, daß man das Reaktionsmedium bei einer Temperatur innerhalb des Bereiches von 20 bis 100 °C hält.

5. Verfahren nach Anspruch 3, dadurch gekennzeichnet, daß der Reaktor/Extruder ein selbstreinigender Reaktor/Extruder ist und einen Selbstreinigungseffekt von mindestens 90 % aufweist; dadurch gekennzeichnet, daß das α-Olefin in dem Reaktionsmedium mit einer Konzentration von 0,1 bis 15 phm anwesend ist; dadurch gekennzeichnet, daß man das Reaktionsmedium bei einer Temperatur innerhalb des Bereiches von 35 bis 85 °C hält; dadurch gekennzeichnet, daß man die aluminiumorganische Verbindung auswählt aus Triethylaluminium, Tri-n-propylaluminium, Triisobutylaluminium, Trihexylaluminium, Diisobutylaluminiumhydrid und Diethylaluminiumfluorid; und dadurch gekennzeichnet, daß man die lösliche nickelhaltige Verbindung auswählt aus der Gruppe Nickelnaphthenat, Nickeloctanoat und Nickelneodecanoat.

6. Verfahren nach einem der vorhergehenden Ansprüche, dadurch gekennzeichnet, daß man dem hohen cis-1,4-Polybutadien eine Gummichemikalie zusetzt, nachdem es aus der Reaktionszone abgezogen ist.

7. Verfahren nach Anspruch 6, dadurch gekennzeichnet, daß man die Gummichemikalie in einem Weichmacheröl oder einem Mineralöl löst.

8. Verfahren nach Anspruch 7, dadurch gekennzeichnet, daß man in das hohe cis-1,4-Polybutadien 1 bis 10 Gew.-% des Weichmacheröls oder des Mineralöls einmischt.

9. Verfahren nach einem der vorhergehenden Ansprüche, dadurch gekennzeichnet, daß man das hohe cis-1,4-Polybutadien entgast, nachdem es die Reaktionszone verlassen hat.

10. Verfahren nach Anspruch 7 oder 8, dadurch gekennzeichnet, daß die Gummichemikalie ein Abbauverhinderer oder ein Shortstop ist.

11. Verfahren nach Anspruch 1, dadurch gekennzeichnet, daß man das 1,3-Butadien in der Reaktionszone bei einer Umwandlung von mindestens 90 % in hohes cis-1,4-Polybutadien polymerisieren lädt.

## Revendications

1. Procédé pour la polymérisation en masse de 1,3-butadiène en cis-1,4-polybutadiène à poids moléculaire élevé, dans un processus en continu, consistant à :

(1) charger le 1,3-butadiène ; un système de catalyseur comprenant (a) un composé d'organoaluminium, (b) un composé soluble contenant du nickel et (c) un composé contenant du fluor choisi parmi le groupe comprenant le fluorure d'hydrogène, le trifluorure de bore, des complexes de fluorure d'hydrogène et des complexes de trifluorure de bore, dans lequel le rapport molaire du composé d'organoaluminium au composé contenant du nickel se situe dans l'intervalle allant d'environ 2:1 à environ 80:1, dans lequel le rapport molaire du composé contenant du fluor au composé contenant du nickel est compris dans l'intervalle allant d'environ 3:1 à environ 100:1, dans un réacteur/extrudeur d'auto-nettoyage qui contient une zone réactionnelle et une zone de transport ;

(2) laisser le 1,3-butadiène se polymériser en cis-1,4-polybutadiène à poids moléculaire élevé dans la zone réactionnelle, avec un taux de transformation d'au moins 60 pour cent, tout en utilisant des conditions dans lesquelles on dispose d'un refroidissement suffisant par évaporation au sein de la zone réactionnelle, dans le but de maintenir une température comprise dans l'intervalle allant d'environ 10°C à environ 130°C, dans lequel le temps de séjour au sein de la zone réactionnelle est compris dans l'intervalle allant d'environ 1 minute à environ 5 minutes, dans lequel la zone réactionnelle est équipée d'agitateurs co-rotatifs ayant une configuration en coupe transversale en forme de lentille, qui procurent le mélange, dans lequel la zone réactionnelle est conçue pour être une zone de pompage neutre ou pour procurer uniquement une petite quantité d'action de pompage et dans lequel la zone de transport est équipée d'au moins deux vis co-rotatives; et (3) retirer en continu le cis-1,4-polybutadiène à poids moléculaire élevé, hors de la zone réactionnelle, dans lequel au moins 85% des motifs périodiques de butadiène au sein du cis-1,4-polybutadiène à poids moléculaire élevé est de structure cis-1,4-isomère.

2. Procédé selon la revendication 1, **caractérisé**, en outre, **par le fait que** l'on charge au moins un régulateur de poids moléculaire au sein du milieu réactionnel.

3. Procédé selon la revendication 2, **caractérisé en ce que** le régulateur de poids moléculaire est une α-oléfine.

4. Procédé selon la revendication 1, 2 ou 3, **caractérisé en ce que** le milieu réactionnel est maintenu à une température comprise dans l'intervalle allant de 20°C à 100°C.

5. Procédé selon la revendication 3, **caractérisé en ce que** le réacteur/extrudeur est un réacteur/extrudeur

à auto-nettoyage ayant un effet d'auto-nettoyage d'au moins 90 pour cent; **caractérisé en ce que** l'α-oléfine est présente dans le milieu réactionnel à une concentration de 0,1 phm à 15 phm ; **caractérisé en ce que** le milieu réactionnel est maintenu à une température comprise dans l'intervalle allant de 35°C à 85°C ; **caractérisé en ce que** le composé d'organo-aluminium est choisi parmi le groupe comprenant le triéthylaluminium, le tri-n-propylaluminium, le triisobutylaluminium, le trihexylaluminium, l'hydrure de diisobutylaluminium et le fluorure de diéthylaluminium et **caractérisé en ce que** le composé soluble contenant du nickel est choisi parmi le groupe comprenant le naphténate de nickel, l'octanoate de nickel et le néodécanoate de nickel.

6. Procédé selon l'une quelconque des revendications précédentes, **caractérisé**, en outre, **par le fait qu'**on ajoute un produit chimique de caoutchouc au cis-1,4-polybutadiène à poids moléculaire élevé, après l'avoir retiré de la zone réactionnelle.

7. Procédé selon la revendication 6, **caractérisé en ce que** le produit chimique de caoutchouc est dissous dans une huile plastifiante ou une huile minérale.

8. Procédé selon la revendication 7, **caractérisé en ce qu'**on mélange de 1 à 10 pour cent en poids de l'huile plastifiante ou de l'huile minérale au sein du cis-1,4-polybutadiène à poids moléculaire élevé, basé sur le poids du cis-1,4-polybutadiène à poids moléculaire élevé.

9. Procédé selon l'une quelconque des revendications précédentes, **caractérisé**, en outre, **par le fait qu'**on élimine les produits volatils hors du cis-1,4-polybutadiène à poids moléculaire élevé après l'avoir retiré de la zone réactionnelle.

10. Procédé selon la revendication 7 ou 8, **caractérisé en ce que** le produit chimique de caoutchouc est an anti-dégradant ou un agent d'arrêt rapide.

11. Procédé selon la revendication 1 **caractérisé en ce que** le 1,3-butadiène est laissé se polymériser en cis-1,4 polybutadiène dans la zone réactionnelle, avec un taux de transformation d'au moins 90 pour cent.